# EUROPEAN PATENT SPECIFICATION

(11) **EP 2 347 123 B1**
(45) Date of publication and mention of the grant of the patent: **10.04.2013**
(21) Application number: 09736648.8
(22) Date of filing: 07.10.2009
(51) Int. Cl.: F03B 17/06, F03B 13/10

(54) **VORTICAL FLOW TURBINE**
WIRBELSTRÖMUNGSTURBINE
TURBINE À ÉCOULEMENT TOURBILLONNAIRE

(30) Priority: 14.10.2008 GB 0818825
(43) Date of publication of application: 27.07.2011
(73) Proprietor: Green-Tide Turbines Limited, Cambridgeshire CB2 9NQ (GB)
(72) Inventor: EVANS, Michael, J., Cambridgeshire CB2 9NQ (GB)
(74) Representative: Lessard, Jason Donat
(86) International application number: PCT/GB2009/051330
(87) International publication number: WO 2010/043887

(56) References cited:
- WO-A1-80/00473
- WO-A1-2007/055585
- WO-A2-03/025385
- CA-A1- 2 301 388
- DE-A1- 10 028 890
- FR-A- 600 475
- FR-A- 1 049 083
- JP-A- 58 079 677
- US-A1- 2006 192 387

## Description

This invention relates to a water turbine, such as the one described in the patent application CA-A-2 301 388.

A water turbine extracts some of the energy from a moving body of water, usually for electricity production. Common forms of water turbines comprise hydrofoil blades that are rotated by a body of water flowing through it.

The water turbine including hydrofoil blades captures more energy when a greater body of water passes through it. Therefore, such designs commonly include long blades to maximise the swept area of the turbine. However, long blades can lead to structural disadvantages.

In a tidal stream or river current, there is a variation of velocity with respect to the depth of the body of water. Furthermore a water current consists of swirls and eddies that could result in parts of the turbine being exposed to currents moving at different speeds and can even be in the opposite direction to the bulk water current. Therefore, when a hydrofoil blade is placed in such a body of water, there is a difference in the force on different parts of the blade and between different blades on the turbine. This can cause damage to the blades, the hub or the bearings, which can lead to failure.

Furthermore, the rotational speed of a long hydrofoil turbine blade is low. Therefore, a gearbox is generally needed to drive a generator. It is undesirable to have a gearbox in underwater locations, as it leads to increased cost in maintenance and repair.

Still furthermore, the long hydrofoil turbine blade can cause damage to a marine environment. For example, a fish or sea mammal swimming near a long water turbine blade may collide with the blade, this could result in injury or death to the fish or sea mammal, and potentially damage to the turbine.

Another form of water turbine is the Pelton wheel. The Pelton wheel comprises a wheel with cups mounted around the circumference. A high-pressure jet of water is directed towards the cups, which imparts its momentum to the cups as the wheel rotates. This technology creates a lot of friction between the water and the moving parts of the turbine which leads to inefficiencies. Furthermore, localised pressure drops lead to cavitation of the water, the shockwaves and localised acidity of which can cause damage to the water turbine.

It is therefore the aim of the present invention to provide a water turbine which alleviates some or all of the above problems.

According to a first aspect of the invention there is provided an axial flow water turbine having a rotor as claimed in Claim 1, for receiving a vortical flow of water, which comprises a channel arranged to guide the vortical flow of water from a first helix angle to a different helix angle, such that the rotor receives the rotational energy of the vortical flow of water.

Advantageously, the rotor receives the rotational energy of the vortical flow of water, without substantially modifying the rate of flow of the water in the longitudinal axis of the rotor. There are therefore fewer disturbances to the surrounding sea environment.

Furthermore, there is less friction between the water and the rotor compared to, say, the Pelton wheel. This therefore increases the efficiency of the rotor, and reduces the damage to and maintenance frequency of the water turbine.

The rotor may comprise a rotor outlet and rotor inlet, wherein the rotor outlet may have a smaller cross sectional area than a rotor inlet.

The rotor may comprise a central channel extending longitudinally through the rotor.

The water turbine comprises guiding means, arranged for inducing a vortical flow in water flowing past them. The guiding means may have hydrofoil sections, and/or may extend upstream from the water turbine and include vortex shedding means located on a central longitudinal axis of the water turbine.

Optionally, the water turbine further comprises an inlet, and the guiding means may be a plurality of arcuate sections arranged around the inlet.

Advantageously, the guiding means cause the vortical flow of water for the rotor to extract energy from. Furthermore, the water adjacent the inlet of the water turbine is induced into the vortical flow, therefore, the volume of water accelerated into the water turbine is increased.

Optionally, the water turbine is tapered between the inlet and a rotor inlet, such that the radius of the vortical flow is reduced along the longitudinal axis of the water turbine.

This increases the rotational velocity of the vortical flow of water, which increases the rotational velocity of the rotor. Therefore, the rotor can be constructed to smaller dimensions reducing cost and risk of damage to the rotor.

Furthermore, there is less need for a gearbox to drive a generator. This is advantageous as there is no efficiency loss due to the gearing, and less need for maintenance or repair.

Preferably, the water turbine includes a generator, mounted either longitudinally or formed by magnetic means mounted in the rim of the rotor and adjacent stationary wire coils in the duct.

Embodiments of the invention will now be described, by way of example, and with reference to the drawings in which:
Figure 1 illustrates a front view of a water turbine of the first embodiment of the present invention;
Figure 2 illustrates a side cross sectional view of the water turbine of the first embodiment;
Figure 3 illustrates a side cross sectional view of the water turbine of the first embodiment, showing the vortical flow of water;
Figure 4 illustrates a side view of a rotor of the first embodiment, showing the first and second helix angles;
Figure 5 illustrates a side view of a rotor of the second embodiment of the present invention;
Figure 6 illustrates a front view a water turbine of a third embodiment of the present invention;
Figure 7 illustrates a side cross sectional view of the rotor of the third embodiment;
Figure 8 illustrates a front view of a water turbine of the fourth embodiment of the present invention;
Figure 9 illustrates a side cross sectional view of the water turbine of the fourth embodiment;
Figure 10 illustrates a front view of the water turbine of the fifth embodiment of the present invention;
Figure 11 illustrates a side cross sectional view of the water turbine of the fifth embodiment;
   and
Figure 12 illustrates a partial front view of a water turbine including guiding means of a similar construction to the guiding means of the fourth embodiment of the present invention.

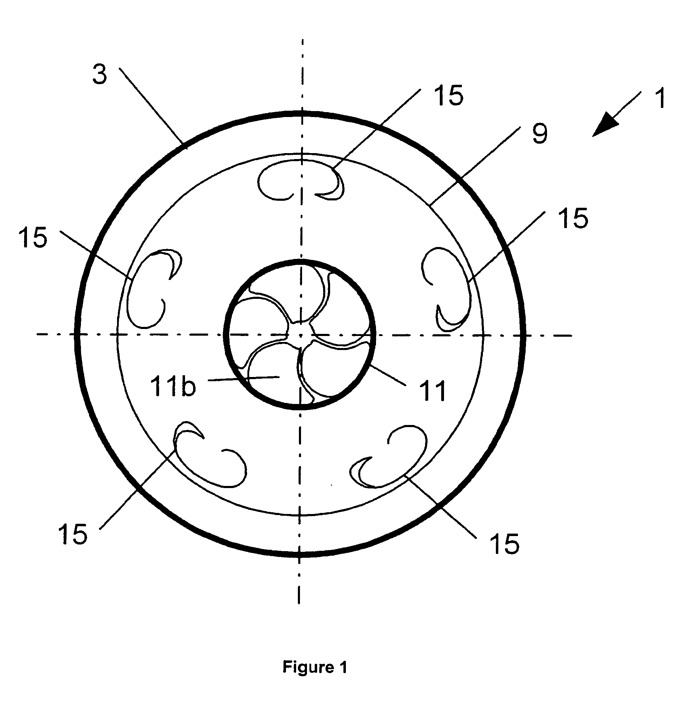

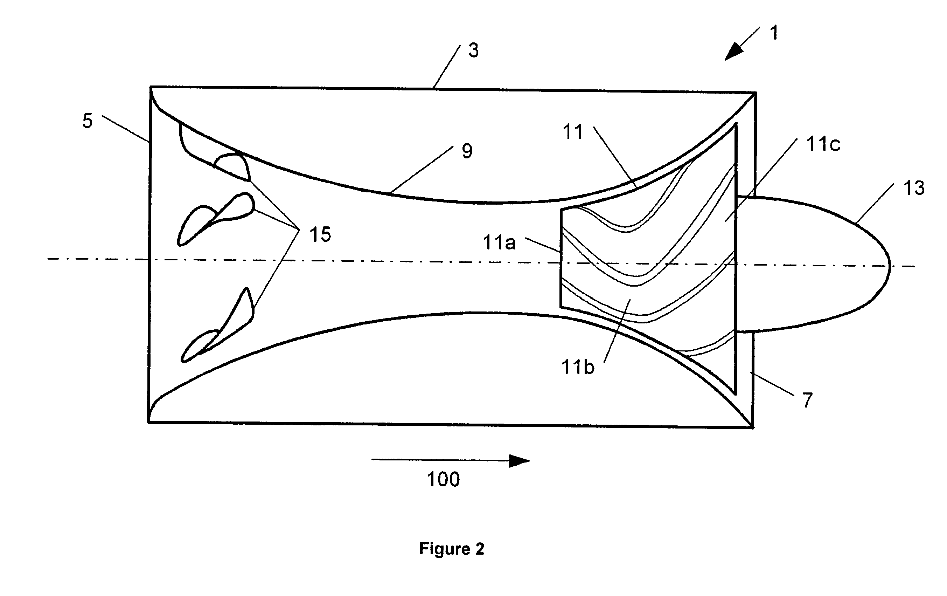

A first embodiment of the present invention will now be described with reference to Figures 1-4.

A water turbine 1 is provided including a housing 3, an inlet 5 for the introduction of water, an outlet 7 for the water to exit, a tapered duct 9, a rotor 11 and a generator 13.

The inlet 5 includes guide vanes 15, each having a suitable curved surface for creating a vortex. Therefore, as water flows over the guide vanes 15, the water will form a vortical flow.

The skilled reader will understand that a vortical flow of water 20 is any flow which substantially takes the form of a helical path.

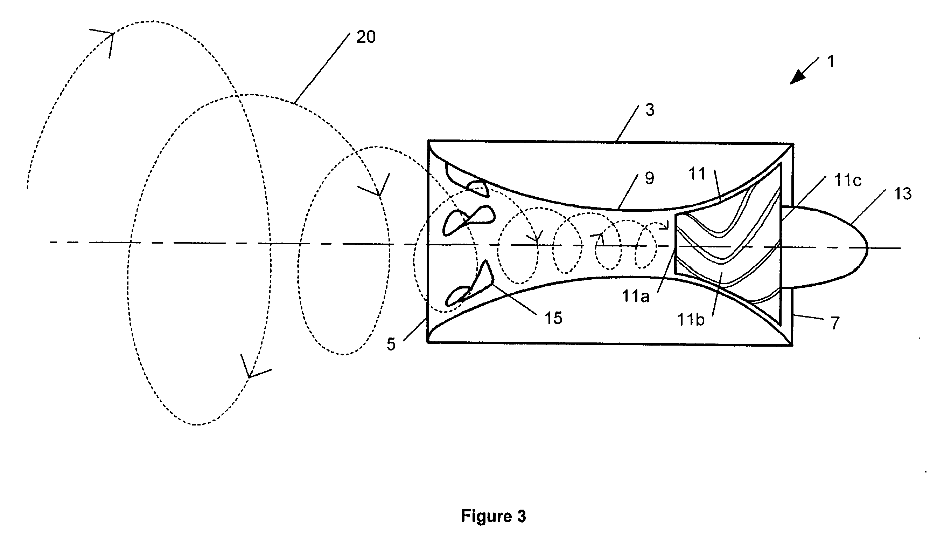

The vortical flow of water 20 creates a radial pressure gradient from the centre of the duct 9 to the walls of the duct 9, such that the pressure is at its lowest point in the centre of the duct 9. This induces the water upstream of the inlet 5 to flow towards the centre of the duct 9. The overall effect, as shown in Figure 3, is to create a vortical flow of water 20 with an increasing radius with respect to the longitudinal distance from the inlet 5. Therefore, a greater volume of water is caused to enter the water turbine 1, with increased longitudinal velocity.

The duct 9 of the water turbine 1 reduces in cross-sectional area from the inlet 5 to a front of the rotor 11. To conserve angular momentum, the angular velocity of the vortical flow of water 20 therefore increases. As shown, the duct's 9 cross-sectional area is approximately at a minimum at the point of the front of the rotor 11, thus the angular velocity of the vortical flow of water 20 is substantially at a maximum.

The rotor 11 has a plurality of channels 11 b, arranged around the circumference of the rotor 11, each extending over the length of the rotor 11. Each channel 11 b has a rotor inlet 11 a, to allow water to enter the channel 11b, and a rotor outlet 11c, to allow water to exit the channel 11b.

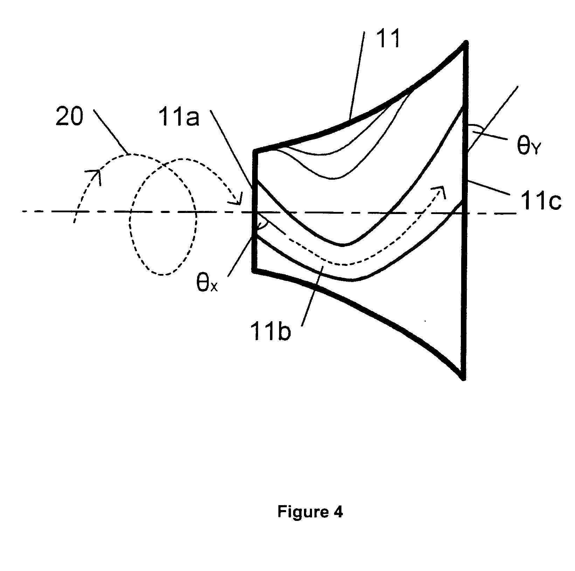

As shown in Figure 4, the vortical flow of water 20 enters the rotor inlets 11a. For the purposes of this description, only one channel 11b will be described in detail, however, the skilled reader will understand that the vortical flow of water 20 will enter at least one channel 11b.

The rotor inlet 11 a is arranged at a first helix angle, θₓ.

The channel 11 b is arranged such that when the vortical flow of water 20 flows through the channel 11 b, a substantial proportion of the rotational kinetic energy is extracted. This is achieved by the channel 11b following a curve such that the rotor outlet 11c is at a second helix angle, θy.

The skilled reader will understand that the choice of first helix angle, second helix angle, and the curve of the channel 11 b are dictated by the conditions in the water turbine 1. For example, the velocity of the water, the longitudinal length of the water turbine 1, the radial expansion of the water flow path through the water turbine over its longitudinal length, and the rotational kinetic energy of the vortical flow of water 20 are all factors in determining the optimal dimensions of the channels 11 b.

In this embodiment, as shown in Figure 4, the second helix angle is approximately a reflection of the first helix angle around the longitudinal axis of the water turbine 1.

The rotor 11 extracts part of the rotational kinetic energy from the vortical flow of water 20, causing the rotor 11 to rotate in the same rotational direction as the vortical flow.

The rotational kinetic energy of the rotor 11 is converted into electric energy at the generator 13. The skilled reader will understand that the water still maintains most of its axial velocity i.e. in the direction 100.

The water then exits the rotor 11 via the rotor outlets 11 c with little or no rotational kinetic energy, i.e. substantially axially.

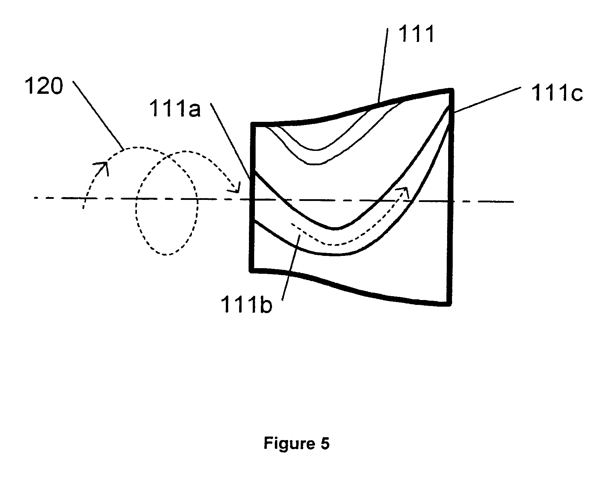

A second embodiment of the present invention will now be described with reference to Figure 5.

Similar to the first embodiment, the rotor 111 contains a plurality of channels 111b arranged around the circumference, with different helix angles at the respective rotor inlets 111 a and rotor outlets 111c. However, in the second embodiment, the cross-sectional area of the channels 111 b decreases along the length of the rotor 111. The reduction in cross-sectional area along the channel 111b causes the flow of water 120 to be accelerated in an axial direction so that it passes out of the rotor outlet 111c as a jet.

The jet exits the rotor 111 at an angle which, by Newton's 3^{rd} Law, causes the rotor 111 to rotate.

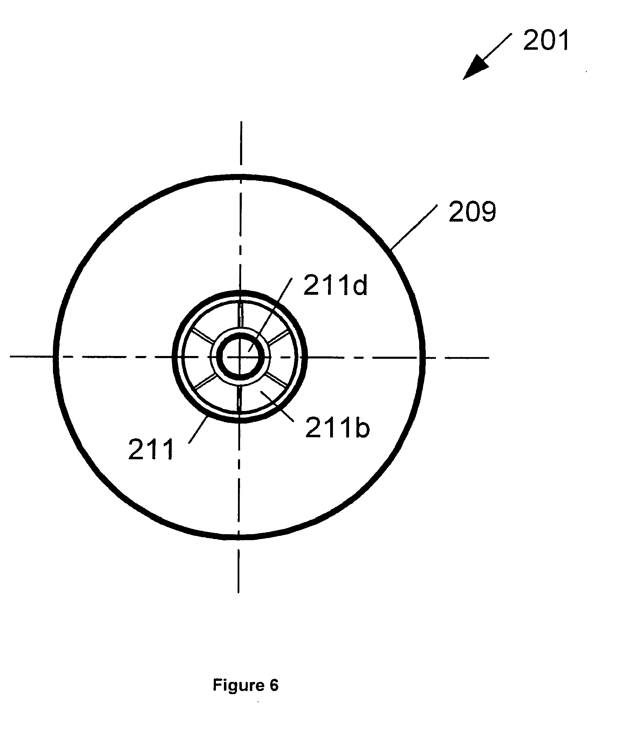

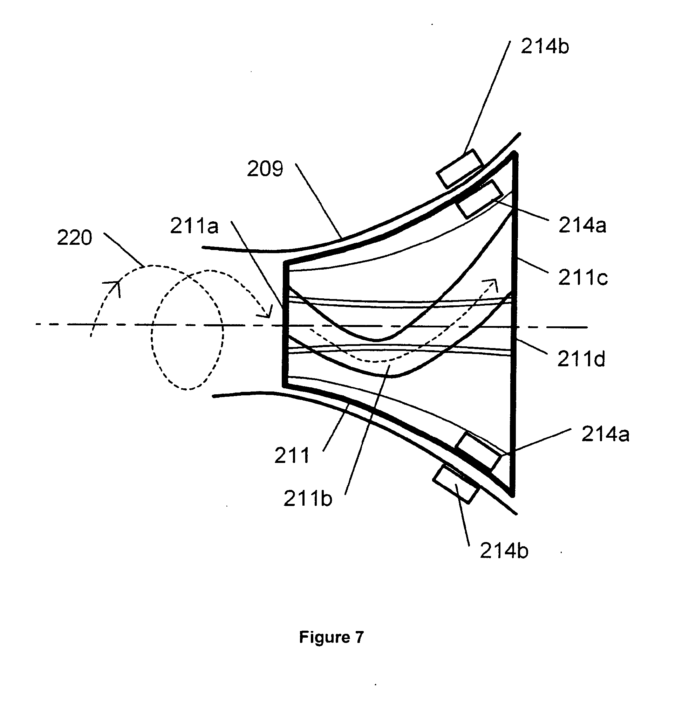

A third embodiment of the present invention will now be described with reference to Figures 6 and 7. Again, the rotor 211 contains a plurality of channels 211 b arranged around the circumference, with different helix angles at the respective rotor inlets 211a and rotor outlets 211 c.

In the third embodiment, however, the rotor 211 has a core channel 211 d, which extends along a central longitudinal axis of the rotor 211 from the rotor inlet 211 a to the rotor outlet 211 c. Any material, such as debris or sea life present in the vortical flow of water 220 would tend to flow towards the centre of the vortical flow of water 220 due to the pressure gradient. The core channel 211d allows for the material to pass through the rotor 211 without passing through the channels 211 b. This decreases the impact the water turbine 201 has on the marine environment and reduces the incidence of damage to the water turbine 201 due to collisions or entanglement with debris or sea-life.

In the third embodiment, a rim-mounted generator 214 is used to convert the rotational energy of the rotor 211 into electrical energy. The rim-mounted generator 214 includes permanent magnets 214a situated around the periphery of the rotor 211, as shown in Figure 7, which rotate past electromagnetic cores 214b in the duct 209.

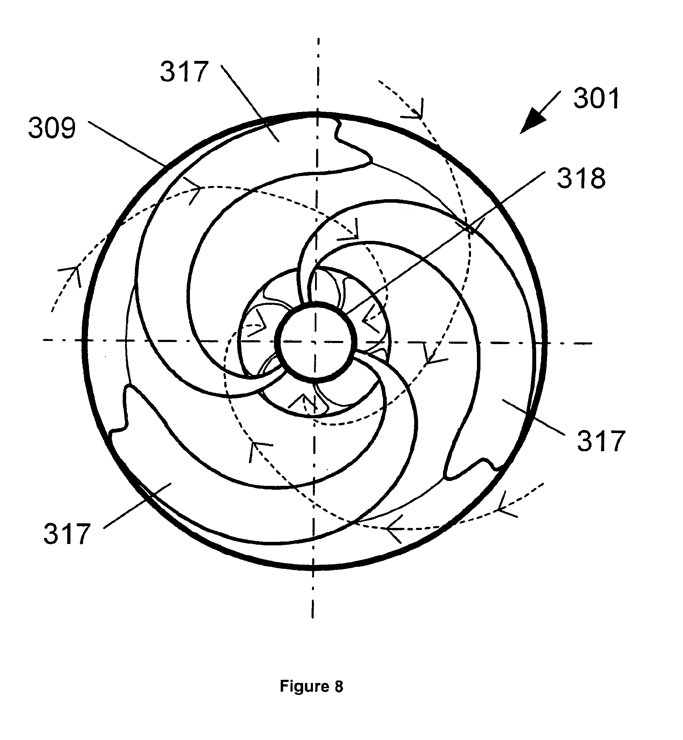

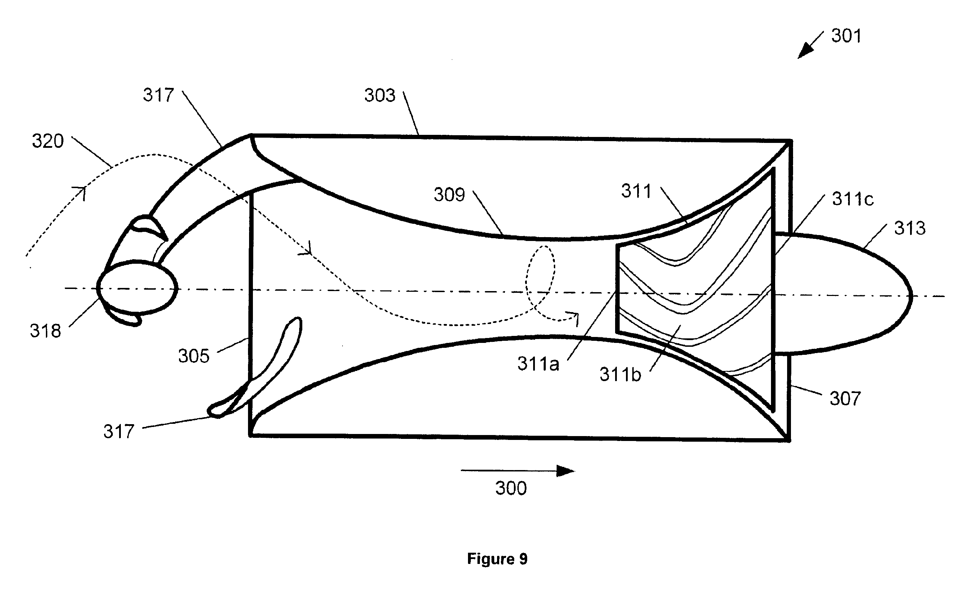

A fourth embodiment of the present invention will now be described with reference to Figures 8 and 9.

The fourth embodiment includes a plurality of guide vanes 317 extending out of the inlet 305 of the water turbine 301 into the water upstream of the inlet 305, that is, to the left of the inlet 305 of the water turbine 301 as shown in Figure 9. In this arrangement, the guide vanes 317 have a hydrofoil section to impart a vortical motion to the flow of water in direction 300, and secondly, provide a barrier against large objects entering the duct 309 of the water turbine 301.

The guide vanes 317 meet at a point along the central longitudinal axis of the water turbine 301, at which is located a nose 318. As the water flows over the nose 318, vortex shedding occurs which reinforces the vortex formed by the guide vanes 317.

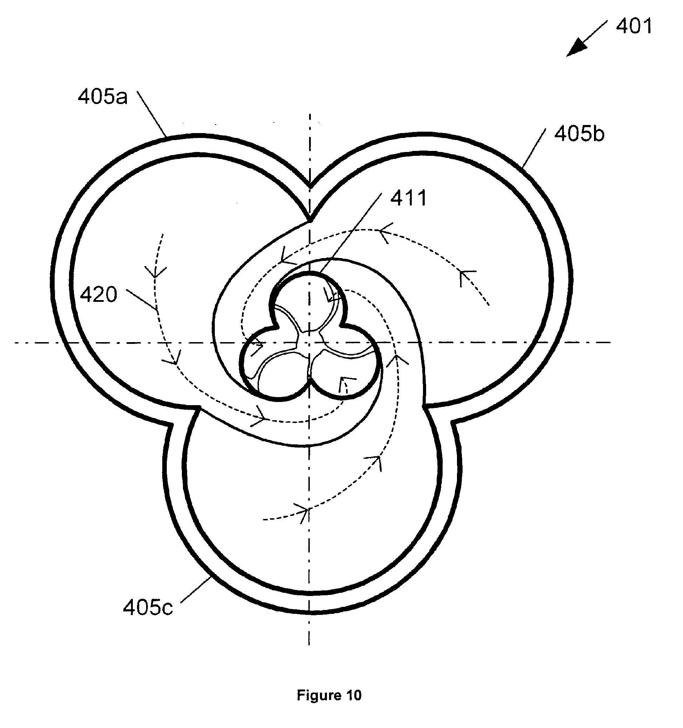

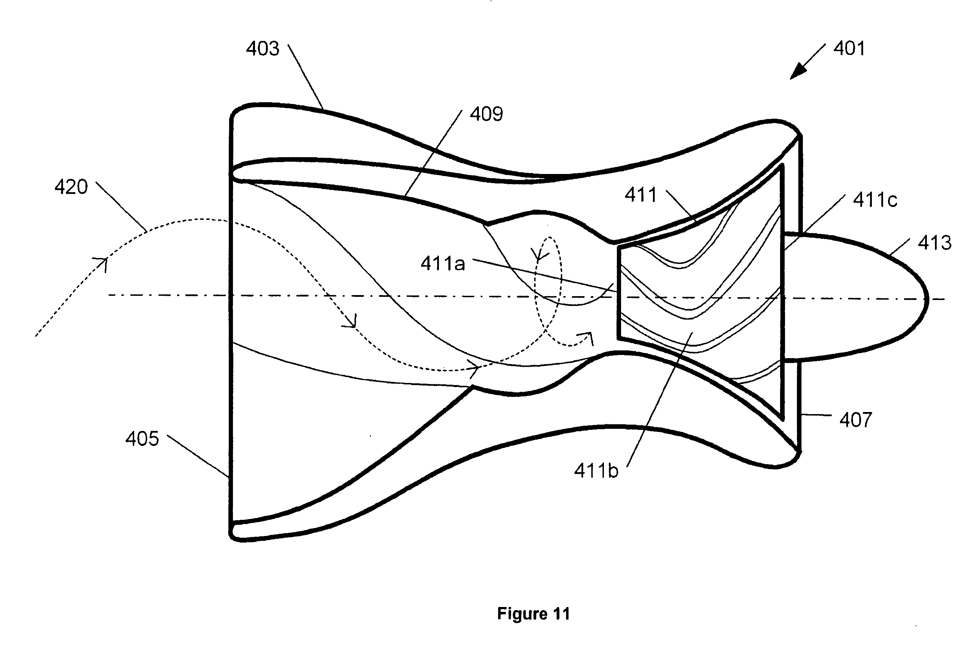

A fifth embodiment of the present invention will now be described with reference to Figures 10 and 11.

In the fifth embodiment, the inlet 405 is provided in a plurality of conjoined arcuate sections 405a, 405b, 405c, defining a closed loop. Along the longitudinal axis of the water turbine 401, the arcuate sections decrease in cross-sectional area and form part of a helical path such that it causes the water to form a vortical flow. The number of arcuate sections in the fifth embodiment is 3, although in different embodiments, different numbers may be implemented.

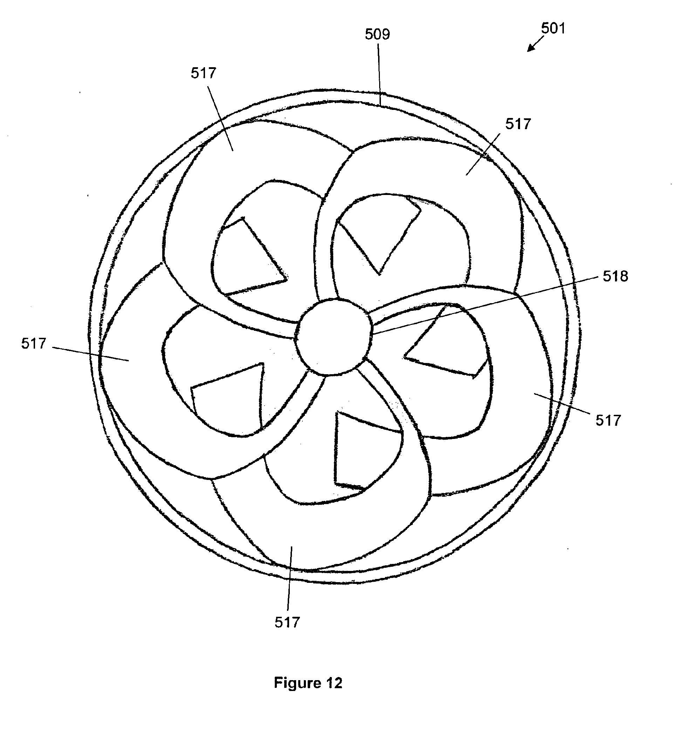

Figure 12 illustrates a water turbine 501 with guiding means 517 of a similar construction to those of the fourth embodiment. The water turbine 501 also includes a nose 518.

The skilled reader will understand that the features disclosed in embodiments 1 to 5 can be used in combination. For example, the water turbine can comprise any one of the guide vanes from any one of the embodiments, in conjunction with any one of the turbine arrangements from any one of the embodiments. Furthermore, the rim-mounted generator disclosed in embodiment 3 can be employed in any other embodiment as a means to convert the rotational kinetic energy into electrical energy.

Furthermore, the rim-mounted and longitudinally mounted generators are only examples of a means to produce electricity, the skilled reader will understand that other electricity production means are possible. Furthermore, electricity production is just one output for the rotational energy of the rotor, the rotational energy could also be converted in other useful energy, such as mechanical.

The skilled reader will also understand that the guide vanes disclosed in the above embodiments are merely examples of vortex forming means. The skilled reader will understand that other vortex forming means can be used.

Furthermore, the skilled reader will understand that the decreasing radius of the duct along the longitudinal axis of the water turbine is a preferable feature, to increase the rotational velocity of the water. However, this feature can be excluded from any one of the above embodiments.

The skilled reader will also understand that although the term "channel" is used in the above description, the channel could also be defined as the gap between two blades.

## Claims

1. An axial flow water turbine (1) comprising a rotor (11) for receiving a flow of water, the rotor comprising a channel (11b) arranged to guide the flow of water from a first helix angle (⊝x) to a different helix angle (⊝y), **characterised by** guiding means (15) spaced upstream from the rotor for inducing a vortical flow in water flowing past them with a duct (9) extending between the guiding means and the rotor, wherein a vortical flow induced, in use, by the guiding means passes through the duct and into the channel of the rotor such that the rotor receives angular momentum from the vortical flow of water.

2. A water turbine as claimed in claim 1, wherein the guiding means comprises a plurality of guide vanes extending out of an inlet of the turbine and upstream of the inlet.

3. A water turbine as claimed in claim 2, wherein the guide vanes meet at a nose located on the central axis of the turbine.

4. A water turbine as claimed in claim 2 or claim 3, wherein the guide vanes are configured to provide a barrier against objects entering the duct.

5. A water turbine as claimed in claim 4, wherein the guide vanes have an arcuate profile along the axial and radial directions of the turbine.

6. A water turbine as claimed in any preceding claim, wherein the guiding means have hydrofoil sections.

7. A water turbine as claimed in any preceding claim, wherein the guiding means extend upstream from the water turbine and include vortex shedding means located on a central longitudinal axis of the water turbine.

8. A water turbine as claimed in claim 1, further comprising an inlet, wherein the guiding means are a plurality of arcuate sections arranged around the inlet.

9. A water turbine as claimed in any preceding claim, wherein the duct reduces in cross-sectional area from the or an inlet of the turbine to the rotor.

10. A water turbine as claimed in claim 9, wherein the duct is tapered between the inlet and the rotor, such that the cross-sectional area of the vortical flow is reduced along the longitudinal axis thereof.

11. A water turbine as claimed in any preceding claim, further comprising a rim-mounted generator.

12. A water turbine as claimed in any preceding claim, wherein the rotor further comprises a rotor inlet for receiving the vortical flow of water and a rotor outlet; and the cross sectional area of the rotor outlet is greater than the cross sectional area of the rotor inlet.

13. A water turbine as claimed in any preceding claim, the rotor further comprising a central channel extending longitudinally through the rotor.

## Patentansprüche

1. Axialwasserturbine (1), umfassend einen Rotor (11) zum Empfangen einer Strömung von Wasser, wobei der Rotor einen Kanal (11 b) umfasst, der dazu angeordnet ist, die Strömung von Wasser von einem ersten Schrägungswinkel (θₓ) zu einem anderen Schrägungswinkel (θ_{y}) zu leiten, **gekennzeichnet durch** Leitmittel (15), die in einem Abstand stromaufwärts von dem Rotor angeordnet sind, um eine Wirbelströmung in an ihnen vorbeiströmendem Wasser herbeizuführen, wobei sich eine Rohrleitung (9) zwischen den Leitmitteln und dem Rotor erstreckt, wobei eine in Gebrauch von den Leitmitteln herbeigeführte Wirbelströmung **durch** die Rohrleitung und in den Kanal des Rotors gelangt, so dass der Rotor einen Drehimpuls von der Wirbelströmung von Wasser empfängt.

2. Wasserturbine nach Anspruch 1, wobei die Leitmittel mehrere Leitschaufeln umfassen, die sich aus einem Einlass der Turbine heraus und stromaufwärts von dem Einlass erstrecken.

3. Wasserturbine nach Anspruch 2, wobei die Leitschaufeln an einem auf der Mittelachse der Turbine liegenden Sporn zusammentreffen.

4. Wasserturbine nach Anspruch 2 oder Anspruch 3 wobei die Leitschaufeln dazu ausgebildet sind, eine Sperre gegen in die Rohrleitung eindringende Gegenstände vorzusehen.

5. Wasserturbine nach Anspruch 4, wobei die Leitschaufeln ein bogenförmiges Profil entlang der Axial- und der Radialrichtung der Turbine aufweisen.

6. Wasserturbine nach einem der vorangehenden Ansprüche, wobei die Leitmittel Tragflügelabschnitte aufweisen.

7. Wasserturbine nach einem der vorangehenden Ansprüche, wobei sich die Leitmittel stromaufwärts von der Wasserturbine erstrecken und auf einer mittleren Längsachse der Wasserturbine liegende Wirbelablösungsmittel umfassen.

8. Wasserturbine nach Anspruch 1, weiter umfassend einen Einlass, wobei es sich bei den Leitmitteln um mehrere bogenförmige Abschnitte handelt, die um den Einlass herum angeordnet sind.

9. Wasserturbine nach einem der vorangehenden Ansprüche, wobei die Querschnittsfläche der Rohrleitung von dem oder einem Einlass der Turbine zu dem Rotor abnimmt.

10. Wasserturbine nach Anspruch 9, wobei die Rohrleitung zwischen dem Einlass und dem Rotor verjüngt ist, so dass die Querschnittsfläche der Wirbelströmung entlang der Längsachse derselben verringert ist.

11. Wasserturbine nach einem der vorangehenden Ansprüche, weiter umfassend einen randmontierten Generator.

12. Wasserturbine nach einem der vorangehenden Ansprüche, wobei der Rotor weiter einen Rotoreinlass zum Empfangen der Wirbelströmung von Wasser und einen Rotorauslass umfasst, und die Querschnittsfläche des Rotorauslasses größer ist als die Querschnittsfläche des Rotoreinlasses.

13. Wasserturbine nach einem der vorangehenden Ansprüche, wobei der Rotor weiter einen mittleren Kanal umfasst, der sich in Längsrichtung durch den Rotor erstreckt.

## Revendications

1. Turbine hydraulique à écoulement axial (1) comprenant un rotor (11) pour recevoir un écoulement d'eau, le rotor comprenant un canal (11 b) agencé pour guider l'écoulement d'eau d'un premier angle d'hélice (θₓ) vers un angle d'hélice différent (θ_{y}), **caractérisé par** des moyens de guidage (15) espacés en amont du rotor pour induire un écoulement tourbillonnaire dans de l'eau s'écoulant à travers eux avec une conduite (9) s'étendant entre les moyens de guidage et le rotor, dans laquelle un écoulement tourbillonnaire induit, en utilisation, par les moyens de guidage passe à travers la conduite et dans le canal du rotor de sorte que le rotor reçoit un moment cinétique de l'écoulement tourbillonnaire d'eau.

2. Turbine hydraulique selon la revendication 1, dans laquelle les moyens de guidage comprennent une pluralité d'aubes de guidage dépassant d'une admission de la turbine et en amont de l'admission.

3. Turbine hydraulique selon la revendication 2, dans laquelle les aubes de guidage se rejoignent au niveau d'un bec situé sur l'axe central de la turbine.

4. Turbine hydraulique selon la revendication 2 ou la revendication 3, dans laquelle les aubes de guidage sont configurées pour fournir une barrière face aux objets entrant dans la conduite.

5. Turbine hydraulique selon la revendication 4, dans laquelle les aubes de guidage ont un profil arqué le long des directions axiale et radiale de la turbine.

6. Turbine hydraulique selon l'une quelconque des revendications précédentes, dans laquelle les moyens de guidage ont des sections d'hydroptère.

7. Turbine hydraulique selon l'une quelconque des revendications précédentes, dans laquelle les moyens de guidage s'étendent en amont de la turbine hydraulique et comprennent des moyens de décollement de tourbillon situés sur un axe longitudinal central de la turbine hydraulique.

8. Turbine hydraulique selon la revendication 1, comprenant en outre une admission, dans laquelle les moyens de guidage sont une pluralité de sections arquées agencées autour de l'admission.

9. Turbine hydraulique selon l'une quelconque des revendications précédentes, dans laquelle la conduite voit son aire en coupe diminuer depuis la ou une admission de la turbine vers le rotor.

10. Turbine hydraulique selon la revendication 9, dans laquelle la conduite est effilée entre l'admission et le rotor, de telle sorte que l'aire en coupe de l'écoulement tourbillonnaire est diminuée le long de son axe longitudinal.

11. Turbine hydraulique selon l'une quelconque des revendications précédentes, comprenant en outre un générateur monté sur gorge.

12. Turbine hydraulique selon l'une quelconque des revendications précédentes, dans laquelle le rotor comprend en outre une admission de rotor permettant de recevoir l'écoulement tourbillonnaire d'eau et un refoulement de rotor ;
et l'aire en coupe du refoulement de rotor est plus grande que l'aire en coupe de l'admission de rotor.

13. Turbine hydraulique selon l'une quelconque des revendications précédentes, le rotor comprenant en outre un canal central s'étendant longitudinalement à travers le rotor.
